# FASCICULE DE BREVET EUROPEEN

(11) **EP 3 117 100 B1**
(45) Date de publication et mention de la délivrance du brevet: **20.09.2023**
(21) Numéro de dépôt: 15718508.3
(22) Date de dépôt: 13.03.2015
(51) Int. Cl.: F03G 6/06, F22B 35/00

(54) **INSTALLATION DE PRODUCTION D'ENERGIE A PARTIR DE LA BIOMASSE ET DE L'ENERGIE SOLAIRE**
ANLAGE ZUR ENERGIEGEWINNUNG AUS BIOMASSE UND SOLARENERGIE
FACILITY FOR ENERGY PRODUCTION FROM BIOMASS AND SOLAR ENERGY

(30) Priorité: 13.03.2014 FR 1400602
(43) Date de publication de la demande: 18.01.2017
(73) Titulaire: Mini Green Power, 83400 Hyères (FR)
(72) Inventeur: RIONDEL, Jean, 83400 Hyères (FR)
(74) Mandataire: Macquet, Christophe
(86) Numéro de dépôt international: PCT/FR2015/000054
(87) Numéro de publication internationale: WO 2015/136163

(56) Documents cités:
- EP-A1- 2 623 778
- EP-A2- 1 890 035
- WO-A1-95/11371
- WO-A1-2013/030889
- Anonymous: "Cogeneration", , 8 mars 2014 (2014-03-08), XP055151055, Extrait de l'Internet: URL:http://en.wikipedia.org/w/index.php?ti tle=Cogeneration&oldid=598664191 [extrait le 2014-11-05]

## Description

L'invention porte sur une installation de production d'une énergie électrique et/ou d'une énergie calorifique à partir d'une exploitation d'une biomasse et d'une énergie solaire.

Le document WO 2013/087949 décrit une installation qui est destinée à produire une énergie électrique à partir d'une exploitation d'une biomasse et d'une énergie solaire. L'installation comprend un circuit primaire à l'intérieur duquel circule un fluide caloporteur primaire. Le circuit primaire comprend des tubes en relation avec des panneaux solaires pour capter l'énergie solaire et l'énergie calorifique issue de la biomasse. L'installation comprend un circuit secondaire à l'intérieur duquel circule un fluide caloporteur secondaire, un échangeur thermique étant constitutif du circuit primaire et du circuit secondaire pour permettre un échange de chaleur entre le fluide caloporteur primaire et le fluide caloporteur secondaire. Le circuit secondaire comprend un moteur qui est apte à transformer une énergie thermique véhiculée par le fluide caloporteur secondaire en une énergie mécanique qui est ensuite transformée en énergie électrique par l'intermédiaire d'une turbine notamment.

Une telle installation mérite d'être améliorée pour procurer un rendement supérieur, une telle installation présentant l'inconvénient de comporter un échangeur thermique entre deux fluides caloporteurs distincts, ce qui complexifie l'installation, la rend plus encombrante et plus lourde.

Par ailleurs, le document WO 95/11371 décrit une installation de production d'énergie à partir, notamment, d'énergie solaire. L'installation divulgue en particulier deux enceintes de stockage de fluide caloporteur, la première enceinte acceuillant la vapeur issue d'un générateur solaire et la seconde enceinte acceuillant la vapeur issue d'une combustion de gaz dans une turbine à gaz ou d'une post-combustion. La vapeur issue du générateur solaire se déverse dans la seconde enceinte, et c'est uniquement à partir de cette seconde enceinte que la vapeur est prélevée et surchauffée avant de se détendre dans une turbine à vapeur.

Une telle installation ne concerne pas la production d'énergie électrique et/ou calorifique à partir de la biomasse. Elle mérite par ailleurs d'être améliorée pour procurer un rendement supérieur.

Un but de la présente invention est de proposer une installation qui est destinée à produire une énergie électrique à partir d'une exploitation d'une biomasse et d'une énergie solaire, ladite installation étant simple et efficace, fonctionnant à partir d'un unique fluide caloporteur, tout en procurant un rendement thermodynamique optimisé.

L'installation de la présente invention est une installation de production d'une énergie électrique et/ou d'une énergie calorifique à partir d'une exploitation d'une biomasse et d'une énergie solaire selon l'objet de la revendication 1.

L'installation selon l'invention ne comporte donc qu'une unique enceinte de stockage du fluide caloporteur, qui acceuille la vapeur de fluide du dispositif principal de génération de vapeur de fluide. Il n'existe pas de seconde enceinte de stockage de tel fluide. La vapeur de fluide générée par l'énergie solaire est ainsi directement surchauffée dans le surchauffeur logé dans la chaudière. Les gaz de synthèse issus de la biomasse sont eux mêmes directement des combustibles de la chaudière et la chaleur dégagée par la combustion de ces gaz dans la chaudière permet, notamment, le surchauffage de la vapeur qui provient de l'enceinte de l'unique enceinte de stockage, ce qui améliore les rendements de l'installation par rapport à ceux de l'art antérieur présentant deux enceintes séparées.

L'enceinte est avantageusement équipée d'une boucle secondaire qui est en relation avec le dispositif auxiliaire de génération de vapeur de fluide, ce dispositif auxiliaire comprenant un échangeur de chaleur qui est logé à l'intérieur de la chaudière.

La chaudière loge préférentiellement un réchauffeur constitutif du circuit principal, le surchauffeur étant placé en amont de la machine à vapeur tandis que le réchauffeur est placé en en aval de la machine à vapeur selon un sens de circulation du fluide caloporteur à l'intérieur du circuit principal.

La chaudière loge de préférence un échangeur thermique constitutif d'un circuit de chauffage d'un bâtiment.

La chaudière chaudière loge un volet qui est mobile entre, d'une part, une position de fermeture dans laquelle le volet dirige l'essentiel des gaz de combustion dans un canal de dérivation muni d'un échangeur de chaleur et, d'autre part, une position d'ouverture dans laquelle l'essentiel des gaz de combustion transite directement dans la chaudière, sans emprunter ledit canal.

Le circuit principal comprend avantageusement un condenseur à l'intérieur duquel la vapeur de fluide subit une condensation en liquide caloporteur.

Le condenseur est par exemple associé à un premier ventilateur pour faire circuler un flux d'air à travers le condenseur, le flux d'air étant au moins partiellement constitutif d'un air pulsé de séchage de la biomasse.

L'installation est notamment équipée d'un dispositif de commande de la mise en oeuvre d'un extracteur d'air équipant une sortie d'air de la chaudière, du premier ventilateur et d'un deuxième ventilateur d'amenée d'air pulsé à l'intérieur du gazogène, à partir d'une température mesurée par un capteur de température que loge le gazogène et à partir d'une température mesurée par un capteur de température équipant le surchauffeur.

La chaudière est par exemple équipée d'un canal d'alimentation en biogaz.

La machine à vapeur est avantageusement indifféremment un moteur à pistons ou une turbine à vapeur, qui est en relation avec un alternateur.

D'autres caractéristiques et avantages de la présente invention apparaîtront à la lecture de la description qui va en être faite d'exemples de réalisation, en relation avec les figures des planches annexées, dans lesquelles :
La figure 1 est une vue schématique d'une installation de la présente invention.
La figure 2 est un diagramme entropique illustrant un cycle thermodynamique que subit un fluide caloporteur circulant à l'intérieur de l'installation représentée sur la figure précédente.

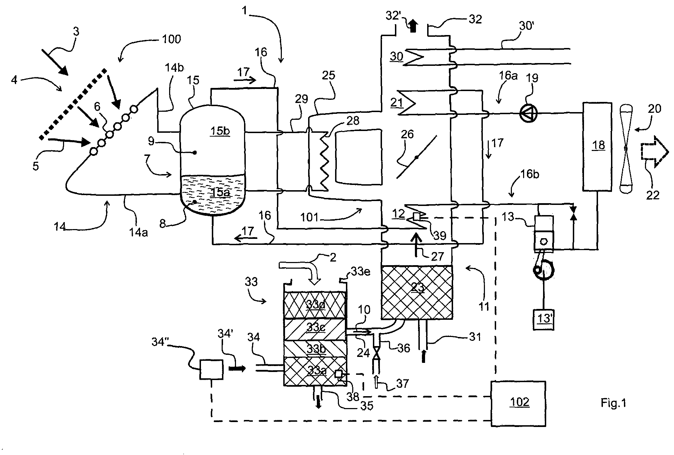

Sur la figure 1, une installation 1 est destinée à produire une énergie électrique et/ou une énergie calorifique à partir d'une exploitation d'une biomasse 2 et d'une énergie solaire 3. L'installation 1 est apte à fournir une énergie, notamment une énergie électrique, en continuité, c'est-à-dire vingt-quatre heures sur vingt-quatre et sept jours sur sept. L'installation 1 est notamment dimensionnée pour fournir une puissance électrique qui est couramment qualifiée de faible, par exemple de l'ordre de 50 kW à plus ou moins 30% près, mais une taille de l'installation 1 est modulable pour fournir une puissance électrique différente. Il en résulte des domaines d'application nombreux et variés. Plus particulièrement, l'installation 1 est du type centrale électrique avec cogénération fonctionnant en continu à partir d'une pluralité de carburants écologiques.

L'un des carburants écologiques est l'énergie solaire 3, qui est captée à partir de panneaux solaires 4 que comprend l'installation 1. Les panneaux solaires 4 sont notamment agencés en lentilles de Fresnel pour concentrer des rayons solaires 5 sur au moins un tube et, préférentiellement, une pluralité de tubes 6 de l'installation 1 en vue de transformer un fluide caloporteur 7, qui est présent à l'intérieur des tubes 6 à l'état liquide caloporteur 8, en une vapeur de fluide 9. Les panneaux solaires 4 sont notamment de poids réduit et de faible épaisseur. Les panneaux solaires 4 concentrent les rayons solaires 5 sur les tubes 6 pour extraire la chaleur de l'énergie solaire 3. Les panneaux solaires laissent éventuellement passer la lumière à leur travers et peuvent donc aisément être installés sur des bâtiments nécessitant un éclairage naturel, du type hangar, serre, piscine ou analogue. Grâce à une concentration de la chaleur sur les tubes 6, les panneaux solaires 4 procurent un environnement plus frais sous les panneaux solaires 4. Le fluide caloporteur 7 est l'eau. Il peut cependant s'agir d'un fluide diphasique, tel qu'un mélange d'eau et de glycol par exemple ou analogue.

L'autre carburant écologique est la biomasse 2 dont une pyrolyse génère des gaz de synthèse 10. Ces derniers sont brûlés à l'intérieur d'une chaudière 11 pour fournir une énergie calorifique, qui est notamment captée par un réchauffeur d'eau 21, ou économiseur, et par un surchauffeur 12, pour chauffer ladite vapeur de fluide 9 en provenance des tubes 6. La vapeur de fluide 9 est ultérieurement dirigée vers une machine à vapeur 13. La machine à vapeur 13 est apte à transformer l'énergie calorifique de la vapeur de fluide 9 en énergie mécanique. La machine à vapeur 13 est notamment un moteur à pistons, une turbine à vapeur ou analogue. La machine à vapeur 13 est avantageusement associée à un alternateur 13', qui est à même de transformer l'énergie mécanique produite en énergie électrique.

Un mode de réalisation préféré de l'installation 1 va maintenant être décrit en détail.

L'installation 1 comprend une boucle primaire 14 de circulation du fluide caloporteur 9. La boucle primaire 14 comprend une enceinte 15 de stockage du fluide caloporteur 9. L'enceinte 15 comprend une zone inférieure 15a de stockage du liquide caloporteur 8 et une zone supérieure 15b de stockage de la vapeur de fluide 9. L'enceinte 15 maintient en équilibre thermodynamique le liquide caloporteur 8 et la vapeur de fluide 9. La boucle primaire 14 relie la zone inférieure 15a à la zone supérieure 15b par l'intermédiaire de canalisations comprenant les tubes 6. Ces derniers reçoivent les rayons solaires 5 concentrés par les panneaux solaires 4 ce qui permet une vaporisation du fluide caloporteur 7 depuis l'état de liquide caloporteur 8 vers l'état de vapeur de fluide 9. Ces dispositions sont telles que la boucle primaire 14 comprend une branche liquide 14a qui s'étend entre la zone inférieure 15a et les tubes 6 ainsi qu'une branche vapeur qui s'étend depuis les tubes 6 jusqu'à la zone supérieure 15b. A l'intérieur de la branche liquide 14a, le fluide caloporteur 7 est à l'état de liquide caloporteur 8 tandis qu'à l'intérieur de la branche vapeur 14b le fluide caloporteur 7 est à l'état de vapeur de fluide 9. Il résulte de ces dispositions que le fluide caloporteur 7 passe à l'intérieur de la boucle primaire 14 de l'état de liquide caloporteur 8 à l'état de vapeur de fluide 9 à 40 bars par exemple.

L'installation 1 comprend un circuit principal 16 de circulation du fluide caloporteur 7, qui s'étend également de la zone supérieure 15b jusqu'à la zone inférieure 15a. Selon un sens de circulation 17 du fluide caloporteur 7 à l'intérieur du circuit principal 16 depuis la zone supérieure 15b vers la zone inférieure 15a, le circuit principal 16 comprend successivement le surchauffeur 12, la machine à vapeur 13, un condenseur 18, une pompe 19 et un réchauffeur 21. Le condenseur 18 est destiné à permettre une condensation du fluide caloporteur 7, qui subit une transformation de phase à l'intérieur du condenseur 18 en passant de l'état de vapeur de fluide 9 à l'état de liquide caloporteur 8. Le condenseur 18 permet également un refroidissement du fluide caloporteur 7. Le condenseur 18 est préférentiellement associé à un premier ventilateur 20 pour faciliter une telle transformation de phase. Le premier ventilateur 20 permet un réchauffement d'un flux d'air 22, qui traverse le condenseur 18. Ce flux d'air chaud 22 est alors avantageusement utilisé pour réchauffer la biomasse 2 ou un bâtiment. Dans d'autres modes de réalisation, le flux d'air chaud est remplacé par un échangeur eau/eau pour réchauffer la biomasse 2 ou le bâtiment. La pompe 19 est prévue pour permettre une circulation du fluide caloporteur 7 à l'intérieur du circuit principal 16. Le réchauffeur 21 est apte à préchauffer le fluide caloporteur 7, préalablement au retour de ce dernier à l'intérieur de la zone inférieure 15a. Le circuit principal 16 comprend une portion liquide 16a à l'intérieur de laquelle le fluide caloporteur 7 est à l'état de liquide caloporteur 8 et une portion vapeur 16b à l'intérieur de laquelle le fluide caloporteur 7 est à l'état de vapeur de fluide 9. La portion vapeur 16b s'étend depuis la zone supérieure 15b jusqu'au condenseur 18 et la portion vapeur 16b comprend successivement, selon le sens de circulation 17 du fluide caloporteur 7 à l'intérieur du circuit principal 16, le surchauffeur 12 et la machine à vapeur 13. La portion liquide 16a s'étend depuis le condenseur 18 jusqu'à la zone inférieure 15a et la portion liquide 16a comprend successivement, selon le sens de circulation 17 du fluide caloporteur 7 à l'intérieur du circuit principal 16, la pompe 19 et le réchauffeur 21. Il résulte de ces dispositions que la vapeur de fluide 9 qui quitte la zone supérieure 15b de l'enceinte 15 est chauffée à l'intérieur de la chaudière 11 par l'intermédiaire du surchauffeur 12. Puis, la vapeur de fluide 9 circule à l'intérieur de la machine à vapeur 13 pour produire de l'énergie mécanique à partir d'une détente de la vapeur de fluide 9. Puis, la vapeur de fluide 9 se condense et se refroidit à l'intérieur du condenseur 18. Puis, le liquide caloporteur 8 est pressurisé par la pompe 19, par exemple à une pression de l'ordre de 40 bars. Puis, le liquide caloporteur 8 est réchauffé à l'intérieur du réchauffeur 21, par exemple à une température de l'ordre de 250°C, préalablement au retour du liquide caloporteur 8 à l'intérieur de l'enceinte 15.

La chaudière 11 comprend un brûleur 23, qui est alimenté en gaz de synthèse 10 par l'intermédiaire d'une conduite d'alimentation 24 ou en biogaz 37 par la conduite d'alimentation 36. Le brûleur 23 est notamment un brûleur à lit fluidisé ou analogue. Le brûleur 23 assure une combustion des gaz de synthèse 10 issus de la biomasse 2. Le brûleur 23 est avantageusement apte à consumer des goudrons présents à l'intérieur des gaz de synthèse 10. Le brûleur 23 transmet de l'énergie calorifique au surchauffeur 12, au réchauffeur 21 et à l'échangeur thermique 30 de manière à ce que l'énergie calorifique issue de la combustion des gaz de synthèse 10 permette un chauffage de la vapeur de fluide 9 contenue à l'intérieur du surchauffeur 12. Autrement dit, le brûlage des gaz de synthèse 10 à l'intérieur de la chaudière 11 produit des gaz de combustion 27 qui traversent le surchauffeur 12. On notera que les dispositions relatives du surchauffeur 12, du réchauffeur 21 et de l'échangeur thermique 30 à l'intérieur de la chaudière 11 sont susceptibles d'être quelconques.

La chaudière 11 comprend un canal de dérivation 25 et un volet 26 qui sont ménagés en parallèle l'un de l'autre. Le volet 26 est mobile entre, d'une part, une position de fermeture dans laquelle le volet 26 dirige l'essentiel des gaz de combustion dans le canal de dérivation 25 muni de l'échangeur de chaleur 28 et, d'autre part, une position d'ouverture dans laquelle l'essentiel des gaz de combustion 27 transite directement, notamment verticalement, dans la chaudière 11, sans emprunter ledit canal 25. Dans une position intermédiaire entre lesdites positions de fermeture et d'ouverture, le volet 26 dirige une partie uniquement des gaz de combustion dans le canal de dérivation 25. Autrement dit, le volet 26 permet de réchauffer de façon optionnelle le dispositif auxiliaire 101 en dirigeant au moins une partie des gaz de combustion 27 vers le canal de dérivation 25, pour permettre audit dispositif auxiliaire 101 de produire de la vapeur lorsque le dispositif principal 100 n'en produit pas assez. Le volet 26 est notamment placé en position de fermeture la nuit et en position d'ouverture le jour.

Le canal de dérivation 25 loge un échangeur de chaleur 28 qui est constitutif d'une boucle secondaire 29 de circulation du fluide caloporteur 9. La boucle secondaire 29 relie la zone inférieure 15a de stockage du liquide caloporteur 8 et la zone supérieure 15b de stockage de la vapeur de fluide 9, de telle sorte que le liquide caloporteur 9 présent à l'intérieur de l'échangeur de chaleur 28 est chauffé par les gaz de combustion 27, notamment à une température de vapeur saturée par exemple de 250°C et à une pression de l'ordre de 40 bars.

La chaudière 11 loge également un échangeur thermique 30 à l'intérieur duquel circule un media caloporteur, l'échangeur thermique 30 étant constitutif d'un circuit de chauffage 30' d'un bâtiment, tel qu'une maison individuelle, un local commercial ou analogue, le bâtiment étant chauffé par cogénération.

La chaudière 11 comporte une entrée d'air 31 qui est préférentiellement agencée en dessous, voire à proximité du brûleur 23 et une sortie d'air 32 qui est préférentiellement ménagée au-dessus de l'échangeur thermique 30. La sortie d'air 32 est préférentiellement équipée d'un extracteur d'air 32'. L'échange thermique 30 permet une récupération calorifique par le media caloporteur, de telle sorte que des fumées évacuées hors de la chaudière 11 par l'intermédiaire de la sortie d'air 32 sont à une température de l'ordre de 100°C. Le media caloporteur est couramment porté à une température de l'ordre de 70°C à 80°C.

L'installation 1 comprend un gazogène 33 qui est relié à la chaudière 11 par l'intermédiaire de la conduite d'alimentation 24. Le gazogène 33 est destiné à recevoir la biomasse 2 pour former les gaz de synthèse 10. Le gazogène 33 est agencé en un réservoir pour la réception de la biomasse 2 et comprend, superposées l'une sur l'autre successivement de bas en haut : une zone de combustion partielle 33a, une zone de pyrolyse 33b, une zone de dégazage 33c et une zone de séchage 33d. La zone de combustion partielle 33a est une zone à l'intérieur de laquelle la biomasse 2 est partiellement brûlée. La zone de combustion partielle 33a est pourvue d'une alimentation régulée 34 en air pulsé 34', l'air pulsé 34' comprenant par exemple au moins partiellement le flux d'air 22. L'air pulsé 34' est propulsé par un deuxième ventilateur 34" vers la zone de combustion partielle 33a dans une partie basse du gazogène 33. Il permet de régler l'air comburant de la combustion dans le gazogène 33. A l'intérieur de la zone de pyrolyse 33b, la biomasse subit une pyrolyse qui est une décomposition de la biomasse 2 par la chaleur issue de la combustion partielle de la biomasse 2, sous une atmosphère pauvre en oxygène et à une température plus réduite que la température de combustion, par exemple à 250 °C. La zone de combustion partielle 33a est également pourvue d'une évacuation 35 qui permet un retrait de cendres issues de la combustion de la biomasse 2 hors du gazogène 33. La zone de dégazage 33c est une zone qui est pourvue de la conduite d'alimentation 24 pour évacuer les gaz de synthèse 10 hors du gazogène 33 vers la chaudière 11. La zone de séchage 33d est une zone à l'intérieur de laquelle la biomasse 2 est déshydratée.

Le gazogène 33 est pourvu d'une bouche d'alimentation 33e en biomasse 2 qui est exempte d'un système à double portes en raison de la présence sur la chaudière 11 de l'extracteur d'air 32' qui met sous dépression le gazogène 33.

La conduite d'alimentation 24 est préférentiellement équipée d'un canal d'alimentation 36 en biogaz 37 pour compléter l'alimentation de la chaudière 11 en gaz de synthèse 10.

Il résulte des dispositions ci-dessus que l'installation 1 de la présente invention comprend avantageusement deux dispositifs générateurs de vapeur de fluide 9, à savoir un dispositif principal 100 de génération de vapeur de fluide 9 et un dispositif auxiliaire 101 de génération de vapeur de fluide 9. Le dispositif principal 100 comprend les panneaux solaires 4 et les tubes 6. Le dispositif auxiliaire 101 comprend l'échangeur de chaleur 28, la chaudière 11 et le gazogène 33. L'enceinte 15 est constitutive du dispositif principal 100 et du dispositif auxiliaire 101. De manière avantageuse, le dispositif principal 100 et le dispositif auxiliaire 101 sont aptes à être mis en oeuvre concomitamment ou alternativement, selon la disponibilité de l'un et de l'autre des carburants écologiques 2,3.

L'installation 1 comprend avantageusement un dispositif de commande 102 de la mise en oeuvre de l'extracteur d'air 32', du premier ventilateur 20 et du deuxième ventilateur 34", à partir d'une température mesurée par un capteur de température 38 que loge la zone de combustion partielle 33a et à partir d'une température mesurée par un capteur de température 39 équipant le surchauffeur 12.

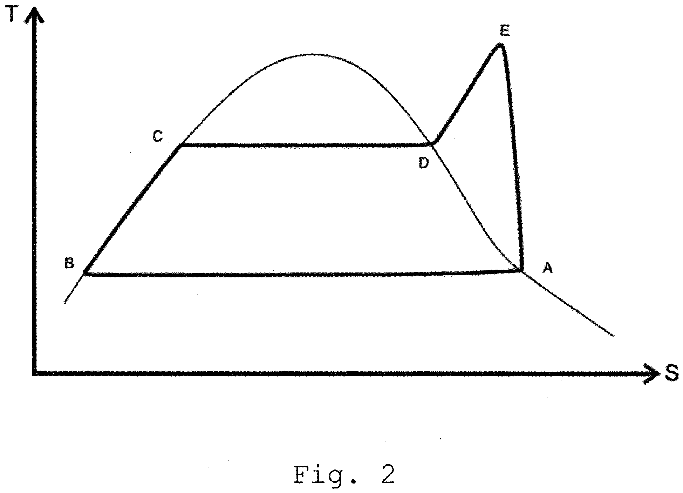

Sur la figure 2, un diagramme entropique illustrant un cycle thermodynamique A,B,C,D que subit le fluide caloporteur 7 circulant à l'intérieur de l'installation 1 est représenté. Le cycle thermodynamique A,B,C,D comprend une étape de condensation AB de la vapeur de fluide 9 en liquide caloporteur 8, suivie d'une étape de chauffage BC du liquide caloporteur 8 à l'intérieur du réchauffeur 21, suivie d'une étape de vaporisation CD du liquide caloporteur 8 en vapeur de fluide 9, suivie d'une phase de surchauffe DE de la vapeur de fluide 9 à l'intérieur de la chaudière 11 et une étape de détente EA de la vapeur de fluide 9 à l'intérieur du moteur à pistons 13. Un tel cycle thermodynamique A,B,C,D présente un rendement thermodynamique supérieur à 20%.

L'ensemble des dispositions ci-dessus est tel que l'installation 1 présente les caractéristiques ci-dessous dont la combinaison est particulièrement avantageuse.

L'installation 1 est avantageusement d'une taille compatible avec une localisation à proximité d'une source de biomasse 2, ce qui diminue des coûts de transport et conforte la modularité de l'installation 1. Il n'est donc pas utile d'importer de la biomasse 2 pour la mise en oeuvre de l'installation 1.

L'installation 1 constitue par ailleurs avantageusement un dispositif simple et peu coûteux de production d'énergie, notamment à partir de l'enceinte 15 qui est à même de former un réservoir de vapeur qui permet de compenser les fluctuations liées au variations du pouvoir calorifique inférieur (PCI) du gaz de synthèse 10, du biogaz 37 et de la biomasse 2.

L'installation 1 est avantageusement non polluante et présente notamment un bilan carbone nul. En effet, une masse de dioxyde de carbone produit par l'installation 1 est équivalente à une masse de dioxyde de carbone emmagasinée à l'intérieur de la biomasse utilisée 2.

L'installation 1 est avantageusement rentable et compétitive avec un coût de production notablement inférieur à des coûts de production d'installations de l'art antérieur.

L'installation 1 permet avantageusement de valoriser des déchets organiques, tels que des rémanents de coupe ou de la biomasse 2 qui est couramment jetée ou brûlée. A titre d'exemple, une telle installation est susceptible de consommer de l'ordre de 800 Kg de biomasse 2 sèche par jour dans le cas où une énergie solaire 3 est disponible, et de l'ordre de 1300 kilogrammes de biomasse 2 dans le cas où aucune énergie solaire 3 n'est disponible. La biomasse 2 utilisée présente en outre la faculté d'être stockable à long terme sans précautions particulières.

L'installation 1 procure une énergie électrique produite localement ce qui permet une meilleure répartition de l'énergie électrique produite sur un territoire, ce qui engendre une minimisation d'une charge électrique sur un réseau de distribution d'énergie électrique. Il en résulte aussi une diminution d'une déperdition d'énergie électrique due au transport de cette dernière, et la possibilité de création d'emplois localement.

## Revendications

1. Installation (1) de production d'une énergie électrique et/ou d'une énergie calorifique à partir d'une exploitation d'une biomasse (2) et d'une énergie solaire (3) comprenant une enceinte (15) de stockage d'un fluide caloporteur (7) à l'état de liquide caloporteur (8) et de vapeur de fluide (9), l'enceinte (15) étant équipée d'une boucle primaire (14) de circulation du fluide caloporteur (7) qui est en relation avec un dispositif principal (100) de génération de vapeur de fluide (9) comprenant des panneaux solaires (4) et des tubes (6), et l'enceinte (15) étant équipée d'un circuit principal (16) de circulation du fluide caloporteur (7), qui comprend un surchauffeur (12) logé dans une chaudière (11) et une machine à vapeur (13), l'installation (1) comprenant en outre un dispositif auxilière (101) de génération de vapeur de fluide (9), le dispositif auxiliaire comprenant un gazogène (33) apte à produire un gaz de synthèse (10) à partir de la biomasse, le gaz de synthèse (10) étant un combustible de la chaudière (11), et la vapeur de fluide (9) qui quitte l'enceinte (15) de stockage étant chauffée à l'intérieur de la chaudière (11) par l'intermédiaire du surchauffeur (12), **caractérisée en ce que** l'enceinte (15) de stockage du fluide caloporteur (7) est unique, et **en ce que** la chaudière (11) loge un volet (26) qui est mobile entre, d'une part, une position de fermeture dans laquelle le volet (26) dirige l'essentiel des gaz de combustion (27) dans un canal de dérivation (25) muni d'un échangeur de chaleur (28) et, d'autre part, une position d'ouverture dans laquelle l'essentiel des gaz de combustion (27) transite dans la chaudière (11), sans emprunter ledit canal (25), l'échangeur de chaleur (28) étant constituif d'une boucle secondaire (29) de circulation du fluide caloporteur (9), la boucle secondaire (29) reliant une zone inférieure (15a) de stockage du liquide caloporteur (8) et une zone supérieure (15b) de stockage de la vapeur de fluide (9).

2. Installation (1) selon la revendication précédente, **caractérisée en ce que** l'enceinte (15) est équipée d'une boucle secondaire (29) qui est en relation avec le dispositif auxiliaire (101) de génération de vapeur de fluide (9), ce dispositif auxiliaire comprenant un échangeur de chaleur (28) qui est logé à l'intérieur de la chaudière (11).

3. Installation (1) selon l'une des revendications 1 ou 2, **caractérisée en ce que** la chaudière (11) loge un réchauffeur (21) constitutif du circuit principal (16), le surchauffeur (12) étant placé en amont de la machine à vapeur (13) tandis que le réchauffeur (21) est placé en en aval de la machine à vapeur (13) selon un sens de circulation (17) du fluide caloporteur (7) à l'intérieur du circuit principal (16).

4. Installation (1) selon l'une quelconque des revendications 1 à 3, **caractérisée en ce que** la chaudière (11) loge un échangeur thermique (30) constitutif d'un circuit de chauffage (30') d'un bâtiment.

5. Installation (1) selon l'une quelconque des revendications 1 à 4, **caractérisée en ce que** le circuit principal (16) comprend un condenseur (18) à l'intérieur duquel la vapeur de fluide (9) subit une condensation en liquide caloporteur (8).

6. Installation (1) selon la revendication 5, **caractérisée en ce que** le condenseur (18) est associé à un premier ventilateur (20) pour faire circuler un flux d'air (22) à travers le condenseur (18), le flux d'air (22) étant au moins partiellement constitutif d'un air pulsé (34') de séchage de la biomasse (2).

7. Installation (1) selon la revendication 6, **caractérisée en ce que** l'installation est équipée d'un dispositif de commande (102) de la mise en oeuvre d'un extracteur d'air (32') équipant une sortie d'air (32) de la chaudière (11), du premier ventilateur (20) et d'un deuxième ventilateur (34") d'amenée d'air pulsé (34') à l'intérieur du gazogène (33), à partir d'une température mesurée par un capteur de température (38) que loge le gazogène (33) et à partir d'une température mesurée par un capteur de température (39) équipant le surchauffeur (12).

8. Installation (1) selon l'une quelconque des revendications 1 à 7, **caractérisée en ce que** la chaudière (11) est équipée d'un canal d'alimentation (24) en biogaz.

9. Installation (1) selon l'une quelconque des revendications 1 à 8, **caractérisée en ce que** la machine à vapeur (13) est indifféremment un moteur à pistons ou une turbine à vapeur, qui est en relation avec un alternateur (13').

## Patentansprüche

1. Anlage (1) zum Erzeugen einer elektrischen Energie und/oder einer Wärmeenergie aus einer Nutzung einer Biomasse (2) und einer Solarenergie (3), umfassend eine Speicherkammer (15) für ein Wärmeträgerfluid (7) im Zustand einer Wärmeträgerflüssigkeit (8) und eines Fluiddampfes (9), wobei die Kammer (15) mit einer primären Schleife (14) zum Zirkulieren des Wärmeträgerfluids (7) ausgestattet ist, der mit einer Hauptvorrichtung (100) zum Erzeugen des Fluiddampfes (9) in Verbindung steht, die Solarpaneele (4) und Rohre (6) umfasst, und wobei die Kammer (15) mit einem Hauptkreislauf (16) zum Zirkulieren des Wärmeträgerfluids (7) ausgestattet ist, der einen in einem Heizkessel (11) untergebrachten Überhitzer (12) und eine Dampfmaschine (13) umfasst, wobei die Anlage (1) ferner eine Hilfsvorrichtung (101) zum Erzeugen von Fluiddampf (9) umfasst, wobei die Hilfsvorrichtung einen Vergaser (33) umfasst, der dazu ausgelegt ist, aus der Biomasse ein Synthesegas (10) zu erzeugen, wobei das Synthesegas (10) ein Brennstoff des Heizkessels (11) ist und der Fluiddampf (9), der die Speicherkammer (15) verlässt, im Inneren des Heizkessels (11) mit Hilfe des Überhitzers (12) erwärmt wird, **dadurch gekennzeichnet, dass** die Speicherkammer (15) für das Wärmeträgerfluid (7) einteilig ist, und dadurch, dass der Heizkessel (11) eine Klappe (26) aufweist, die zwischen einer Verschlussposition einerseits, in der die Klappe (26) den Großteil des Verbrennungsgases (27) in einen Umleitungskanal (25) leitet, der mit einem Wärmetauscher (28) versehen ist, und einer Öffnungsposition andererseits, in der der Großteil des Verbrennungsgases (27) durch den Kanal (11) strömt, ohne den Kanal (25) zu benutzen, beweglich ist, wobei der Wärmetauscher (28) eine sekundäre Schleife (29) zum Zirkulieren des Wärmeträgerfluids (9) bildet, wobei die sekundäre Schleife (29) eine untere Zone (15a) zum Speichern der Wärmeträgerflüssigkeit (8) und eine obere Zone (15b) zum Speichern des Fluiddampfes (9) miteinander verbindet.

2. Anlage (1) nach dem vorhergehenden Anspruch, **dadurch gekennzeichnet, dass** die Kammer (15) mit einer sekundären Schleife (29) ausgestattet ist, die mit der Hilfsvorrichtung (101) zum Erzeugen von Fluiddampf (9) verbunden ist, wobei diese Hilfsvorrichtung einen Wärmetauscher (28) umfasst, der im Inneren des Heizkessels (11) untergebracht ist.

3. Anlage (1) nach einem der Ansprüche 1 oder 2, **dadurch gekennzeichnet, dass** im Heizkessel (11) ein Erhitzer (21) untergebracht ist, der den Hauptkreislauf (16) bildet, wobei der Überhitzer (12) vor der Dampfmaschine (13) angeordnet ist, während der Erhitzer (21) hinter der Dampfmaschine (13) in einer Zirkulationsrichtung (17) des Wärmeträgerfluids (7) innerhalb des Hauptkreislaufes (16) angeordnet ist.

4. Anlage (1) nach einem der Ansprüche 1 bis 3, **dadurch gekennzeichnet, dass** im Heizkessel (11) ein Wärmetauscher (30) untergebracht ist, der einen Heizkreislauf (30') eines Gebäudes bildet.

5. Anlage (1) nach einem der Ansprüche 1 bis 4, **dadurch gekennzeichnet, dass** der Hauptkreislauf (16) einen Kondensator (18) umfasst, in dem der Fluiddampf (9) einer Kondensation zur Wärmeträgerflüssigkeit (8) unterliegt.

6. Anlage (1) nach Anspruch 5, **dadurch gekennzeichnet, dass** dem Kondensator (18) ein erster Lüfter (20) zugeordnet ist, um zu bewirken, dass ein Luftstrom (22) durch den Kondensator (18) zirkuliert, wobei der Luftstrom (22) zumindest teilweise aus gepulster Luft (34') zum Trocknen der Biomasse (2) besteht.

7. Anlage (1) nach Anspruch 6, **dadurch gekennzeichnet, dass** die Anlage mit einer Steuervorrichtung (102) zum Betreiben einer Luftabsaugvorrichtung (32`), die mit einem Luftauslass (32) aus dem Heizkessel (11) ausstattet ist, des ersten Lüfters (20) und eines zweiten Lüfters (34") zur Zufuhr von gepulster Luft (34') in den Vergaser (33) ausgestattet ist, ausgehend von einer Temperatur, die von einem Temperatursensor (38) gemessen wird, der im Vergaser (33) untergebracht ist, und von einer Temperatur, die von einem Temperatursensor (39) gemessen wird, mit dem der Überhitzer (12) ausgestattet ist.

8. Anlage (1) nach einem der Ansprüche 1 bis 7, **dadurch gekennzeichnet, dass** der Heizkessel (11) mit einem Biogas-Zufuhrkanal (24) ausgestattet ist.

9. Anlage (1) nach einem der Ansprüche 1 bis 8, **dadurch gekennzeichnet, dass** die Dampfmaschine (13) wahlweise ein Kolbenmotor oder eine Dampfturbine ist, der bzw. die mit einem Generator (13') in Verbindung steht.

## Claims

1. A facility (1) for producing electrical energy and/or heat energy by exploiting biomass (2) and solar energy (3), comprising an enclosure (15) for storing a heat-transfer fluid (7) in the heat-transfer liquid state (8) and fluid vapour (9), the enclosure (15) being equipped with a primary loop (14) for circulation of the heat-transfer fluid (7) which is connected to a main device (100) for generating fluid vapour (9) comprising solar panels (4) and tubes (6), and the enclosure (15) being equipped with a main circuit (16) for circulation of the heat-transfer fluid (7), which comprises a superheater (12) housed in a boiler (11) and a steam machine (13), the facility (1) further comprising an auxiliary device (101) for generating fluid vapour (9), the auxiliary device comprising a gasifier (33) capable of producing a synthesis gas (10) from the biomass, the synthesis gas (10) being a fuel of the boiler (11), and the fluid vapour (9) that leaves the storage enclosure (15) being heated inside the boiler (11) by means of the superheater (12), **characterised in that** the enclosure (15) for storing the heat-transfer fluid (7) is unique, and **in that** the boiler (11) houses a shutter (26) which is movable between, on the one hand, a closure position in which the shutter (26) directs most of the combustion gases (27) into a bypass channel (25) provided with a heat exchanger (28) and, on the other hand, an opening position in which most of the combustion gases (27) transit in the boiler (11), without passing through said channel (25), the heat exchanger (28) belonging to a secondary loop (29) for the circulation of the heat-transfer fluid (9), the secondary loop (29) connecting a lower area (15a) for storing the heat-transfer liquid (8) and an upper area (15b) for storing the fluid vapour (9).

2. The facility (1) according to the preceding claim, **characterised in that** the enclosure (15) is equipped with a secondary loop (29) which is connected to the auxiliary device (101) for generating fluid vapour (9), this auxiliary device comprising a heat exchanger (28) which is housed inside the boiler (11).

3. The facility (1) according to one of claims 1 or 2, **characterised in that** the boiler (11) houses a heater (21) belonging to the main circuit (16), the superheater (12) being placed upstream of the steam machine (13) whereas the heater (21) is placed downstream of the steam machine (13) according to a direction of circulation (17) of the heat-transfer fluid (7) inside the main circuit (16).

4. The facility (1) according to any one of claims 1 to 3, **characterised in that** the boiler (11) houses a heat exchanger (30) belonging to a heating circuit (30') of a building.

5. The facility (1) according to any one of claims 1 to 4, **characterised in that** the main circuit (16) comprises a condenser (18) inside which the fluid vapour (9) undergoes condensation into a heat-transfer liquid (8).

6. The facility (1) according to claim 5, **characterised in that** the condenser (18) is associated with a first fan (20) to make an airflow (22) circulate through the condenser (18), the airflow (22) constituting at least partially a pulsed air (34') for drying the biomass (2).

7. The facility (1) according to claim 6, **characterised in that** the facility is equipped with a device (102) for controlling the implementation of an air extractor (32') equipping an air outlet (32) of the boiler (11), of the first fan (20) and of a second fan (34") for conveying pulsed air (34') inside the gasifier (33), from a temperature measured by a temperature sensor (38) housed in the gasifier (33) and from a temperature measured by a temperature sensor (39) fitted to the superheater (12).

8. The facility (1) according to any one of claims 1 to 7, **characterised in that** the boiler (11) is equipped with a biogas supply channel (24).

9. The facility (1) according to any one of claims 1 to 8, **characterised in that** the steam machine (13) is either a piston engine or a steam turbine, which is connected to an alternator (13').
